# EUROPÄISCHE PATENTSCHRIFT

(11) **EP 1 632 375 B1**
(45) Veröffentlichungstag und Bekanntmachung des Hinweises auf die Patenterteilung: **29.04.2009**
(21) Anmeldenummer: 05016195.9
(22) Anmeldetag: 26.07.2005
(51) Int. Cl.: B60H 1/34

(54) **Luftausströmer, insbesondere für ein Kraftfahrzeug**
Air outlet, in particular for a motor vehicle
Aérateur, notamment pour véhicule automobile

(30) Priorität: 01.09.2004 DE 102004042693
(43) Veröffentlichungstag der Anmeldung: 08.03.2006
(73) Patentinhaber: Behr GmbH & Co. KG, 70469 Stuttgart (DE)
(72) Erfinder: Klingler, Dietrich, 73540 Heubach (DE); Voigt, Klaus, 74321 Bietigheim-Bissingen (DE)

(56) Entgegenhaltungen:
- WO-A-99/07569
- WO-A-20/04080739
- WO-A-20/05016673
- DE-A1- 10 235 526
- DE-A1- 10 243 974
- US-A- 5 072 657

## Beschreibung

Die Erfindung betrifft einen Luftausströmer nach dem Oberbegriff des Anspruchs 1.

Die Luftkonditionierung von Fahrgasträumen von Kraftfahrzeugen ist hinsichtlich der Einleitung und Verteilung von der Luft wachsenden Ansprüchen unterworfen. Insbesondere ist es gewünscht, zwischen gerichteter und diffuser Lufteinleitung möglichst stufenlos wählen zu können.

DE 102 43 974 A1 beschreibt einen Luftausströmer für ein Kraftfahrzeug, bei dem Luft in zwei getrennten Kanälen zuführbar ist, wobei der eine Kanal einem Teil einer Ausströmanordnung zur gerichteten Abgabe der Luft und der andere Kanal einem anderen Teil der Ausströmanordnung zur diffusen oder verwirbelten Abgabe der Luft zugeordnet ist.

Es ist die Aufgabe der Erfindung, einen eingangs genannten Luftausströmer anzugeben, der besonders wenig Bauraum beansprucht.

Diese Aufgabe wird erfindungsgemäß mit den kennzeichnenden Merkmalen des Anspruchs 1 gelöst.

Durch die Kombination zumindest eines zweiten Austrittselements mit dem ersten Austrittelement in einer gemeinsamen Baueinheit ist insgesamt eine besonders große Ausströmfläche der Luft bei kleinen Abmessungen der Baueinheit erreichbar. Zudem kann mit einer erfindungsgemäßen Anordnung von Austrittselementen ein Kaltluftschleier etwa über die Köpfe von Insassen eines Fahrgastraums hinweg gelegt und somit ein angenehmes Klima erzeugt werden.

Weiterhin weist der zweite Ausströmkanal Ablenkmittel auf, die eine gebogene, insbesondere teilkreisförmige Wandung umfassen. Dabei nimmt eine Höhe der Wandung über den Verlauf der Wandung ab. Hierdurch ist zum einen auf einfache Weise ein Drall in die entlang der Wandung strömenden Luft einbringbar und zum anderen ein gleichmäßiger Austritt der mit Drall beaufschlagten Luft über den Verlauf der Wandung realisierbar.

Bevorzugt weist dabei das zweite Austrittselement die gleiche Bauart auf wie das erste Austrittselement, um insgesamt eine optimale Einstellbarkeit zwischen gerichteter und diffuser Luftströmung zu erreichen.

In einer bevorzugten Ausführungsform der Erfindung ist zumindest einer der beiden Zuleitungskanäle sowohl dem ersten als auch dem zweiten Austrittselement zugeordnet, wobei besonders bevorzugt auch der zweite Zuleitungskanal sowohl dem ersten als auch dem zweiten Austrittselement zugeordnet ist. Hierdurch kann auch bei einer Mehrzahl von Austrittselementen die Anzahl separater Zuleitungskanäle klein gehalten werden.

In einer hierzu alternativ Ausführungsform kann es vorgesehen sein, daß ein dritter und ein vierter Zuleitungskanal vorgesehen ist, die dem zweiten Austrittselement zugeordnet sind. Hierdurch ist eine besonders große Flexibilität bei der Einstellung der Luftausströmung erreichbar, da der Luftstrom jedes Zuleitungskanals und somit jedes Ausströmkanals einzeln einstellbar sein kann.

Weiterhin können vorteilhaft drei Austrittselemente der im wesentlichen gleichen Bauart benachbart in einer gemeinsamen Baueinheit angeordnet sein. Besonders bevorzugt sind vier Austrittselemente der im wesentlichen gleichen Bauart benachbart in einer gemeinsamen Baueinheit angeordnet. Hierdurch ist eine besonders feine und zugleich großflächige Dosierung der austretenden Luft bei insgesamt kleinen Abmessungen der Baueinheit ermöglicht. Je nach Anforderung und zur Verfügung stehendem Bauraum kann es aber auch vorteilhaft sein, mehr als vier der Austrittselemente benachbart anzuordnen.

In einer vorteilhaften Ausgestaltung des Luftausströmers weisen der zweite Ausströmkanal des ersten Austrittselements und ein zweiter Ausströmkanal des zweiten Austrittselements jeweils eine gekrümmte Formgebung auf, die hinsichtlich einer resultierenden Drehrichtung der jeweils druchströmenden Luft entgegengesetzt ist. Hierdurch ist eine besonders diffuse Ausströmung der Luft erzielbar. Alternativ kann es aber auch vorgesehen sein, daß die gekrümmte Formgebung so ausgebildet ist, daß die Drehrichtung der austretenden Luft jeweils gleich gerichtet ist. Hierdurch kann die Anzahl unterschiedlicher Einzelteile eines erfindungsgemäßen Luftausströmers verringert werden.

Besonders bevorzugt sind die eine gemeinsame Baueinheit bildenden Austrittselemente in einer Linie nebeneinander angeordnet, so daß insgesamt eine längliche Ausströmfläche der Luft resultiert. Dies kommt vielen Einbauräumen insbesondere bei einem Personenkraftwagen entgegen. Je nach Anforderungen kann jedoch auch eine nicht in einer Linie liegende Anordnung vorgesehen sein. Es kann auch vorgesehen sein, daß die Austrittselemente auf einer gekrümmten Linie angeordnet sind, was eine gute Anpassung an den Bauraum bei gekrümmten Austrittsflächen ermöglicht.

Vorteilhaft weist der erste Ausströmkanal im wesentlichen die Form eines Rohres auf, wobei die Luft den ersten Ausströmkanal vorherrschend parallel zu einer Längsachse des Rohres durchströmt. Hierdurch ist der einem gerichteten Strömungsteil der Luft zugeordnete erste Ausströmkanal auf einfache Weise ausbildbar.

Besonders bevorzugt umgibt dabei die Wandung den ersten Ausströmkanal zumindest teilweise, so daß eine besonders kleine Bauweise des die beiden Austrittskanäle umfassenden Austrittselements ermöglicht ist.

Besonders vorteilhaft ist es vorgesehen, daß der Luftausströmer in einem Armaturenbrett eines Kraftfahrzeugs anordenbar ist. Gerade bei Armaturenbrettern moderner Kraftfahrzeuge trifft ein durch vielfältige Aggregate beengter Bauraum auf besonders hohe Anforderungen an dort vorgesehene Luftaustritte, so daß der erfindungsgemäße Luftausströmer für den Bereich des Armaturenbrettes besonders gut geeignet ist.

In einer bevorzugten Ausführungsform der Erfindung ist es vorgesehen, daß innerhalb eines Zuleitungskanals ein Klappenelement zur einstellbaren Veränderung eines Durchlaßquerschnittes des Zuleitungskanals vorgesehen ist. Hierdurch läßt sich die Einstellung der Luftströmung und auch die anteilige Mischung diffuser und gerichteter Luft besonders einfach realisieren, wobei aus Gründen des begrenzten Bauraums bewußt auf Stellmittel im unmittelbaren Bereich der Austrittselemente verzichtet wird.

Hinsichtlich einer Optimierung des beanspruchten Bauraums ist es vorteilhaft vorgesehen, daß das Verhältnis einer Bautiefe des Luftausströmers zu einer Bauhöhe des Luftausströmers nicht größer als etwa 1,5. Hierdurch wird typischen begrenzten Einbauräumen, insbesondere im Bereich von Armaturenbrettern, Rechnung getragen.

Aus den vorgenannten Gründen sowie aus Gründen einer guten Anpassung von Querschnitten der Zuleitungskanäle und Ausströmelementen ist es bevorzugt vorgesehen, daß das Verhältnis einer gesamten Bauhöhe des Luf tausströmers zu einer gesamten Bauhöhe der Zuleitungskanäle nicht größer als etwa 2 ist. Insbesondere bevorzugt weisen dabei die Ausströmelemente annähernd die gleiche Bauhöhe auf wie die Zuleitungskanäle.

Weitere Vorteile und Merkmale eines erfindungsgemäßen Luftausströmers ergeben sich aus den nachfolgend beschriebenen Ausführungsbeispielen sowie aus den abhängigen Ansprüchen.

Nachfolgend werden zwei bevorzugte Ausführungsbeispiele eines erfindungsgemäßen Luftausströmers beschrieben und anhand der anliegenden Zeichnungen näher erläutert.
- Fig. 1: zeigt eine räumliche Ansicht eines ersten Ausführungsbeispiels eines erfindungsgemäßen und in einem Armaturenbrett eines Kraftfahrzeugs angeordneten Luftausströmers.
- Fig. 2: zeigt eine räumliche Ansicht des Luftausströmers aus Fig. 1 von vome.

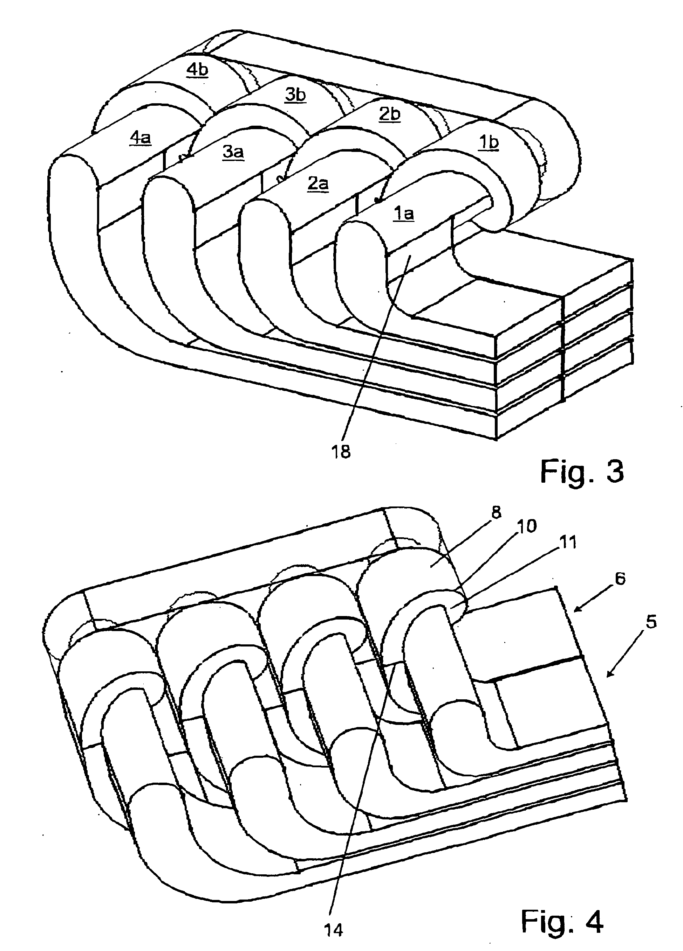

- Fig. 3: zeigt eine räumliche Ansicht des Luftausströmers aus Fig. 2 von hinten.
- Fig. 4: zeigt eine räumliche Ansicht des Luftausströmers aus Fig. 2 von oben.
- Fig. 5: zeigt den Luftausströmer aus Fig. 2 mit zusätzlicher Kenntlichmachung eines erforderlichen Bauraums.
- Fig. 6: zeigt eine räumliche Ansicht eines zweiten Ausführungsbeispiels eines erfindungsgemäßen Luftausströmers von hinten.
- Fig. 7: zeigt eine räumliche Ansicht des Luftausströmers aus Fig. 7 von vorne.

Der Luftausströmer gemäß dem ersten Ausführungsbeispiel umfaßt insgesamt acht Zuleitungskanäle 5, 6 sowie vier in einer Reihe nebeneinander angeordnete Ausströmelemente 1, 2, 3, 4. Jedes der Ausströmelemente 1, 2, 3, 4 ist dabei nach gleicher Bauart ausgebildet und umfaßt jeweils einen ersten Ausströmkanal 1a, 2a, 3a, 4a und einen zweiten Ausströmkanal 1b, 2b, 3b, 4b.

Der jeweilige erste Ausströmkanal 1a, 2a, 3a, 4a ist als gerader, in Richtung des Fahrgastraums offener Rohrabschnitt 9 ausgebildet. Hierdurch wird aus jedem der ersten Ausströmkanäle 1a, 2a, 3a, 4a ein gerichteter, spotartiger Luftstrom abgegeben. Jedem der ersten Ausströmkanäle 1a, 2a, 3a, 4a ist ein separater erster Zuleitungskanal 5a, 5b, 5c, 5d zugeordnet.

Der jeweilige zweite Ausströmkanal weist eine kreisringförmige Austrittsfläche 7 auf. Eine innere Begrenzung des Kreisrings 7 wird dabei von dem Rohrabschnitt 9 des ersten Ausströmkanals des gleichen Austrittselements 1, 2, 3, 4 gebildet. Eine äußere Begrenzung des Kreisrings 7 wird von einer kreisförmig gebogenen Wandung 8 ausgebildet, deren in Richtung des Fahrgastraumes vordere Kante hinter der vorderen Kante des Rohrabschnitts 9 zurückbleibt. Die Wandung 8 weist über ihren Umfang eine Abnehmende Länge auf, so daß eine hintere Kante 10 der Wandung 8 spiralförmig verläuft. Eine rückwärtige Abschlußfläche 11 verbindet die hintere Kante 10 mit der Außenfläche des Rohrabschnitts 9 jeweils lotrecht, so daß die hintere Wandung 11 des zweiten Ausströmkanals 1b, 2b, 3b, 4b den Rohrabschnitt 9 nach Art einer Wendelfläche umläuft.

Jeder der zweiten Ausströmkanäle 1 b, 2b, 3b, 4b ist mit jeweils einem separaten zweiten Zuleitungskanal 6a, 6b, 6c, 6d in einem Anschlußbereich 14 verbunden. Die Zuleitungskanäle weisen jeweils den Querschnitt eines gestreckten Rechtecks auf. Die im Verbindungsbereich mit den Zuleitungskanälen bestehende größte Höhe der Wandung 8 entspricht der größeren Breite des Rechtecks und die Breite der zuvor beschriebenen kreisringförmigen Austrittsfläche 7 entspricht der kleineren Breite des Rechtecks.

Die so durch den jeweiligen zweiten Zuleitungskanal 6a, 6b, 6c, 6d in den jeweiligen zweiten Ausströmkanal 1b, 2b, 3b, 4b eingebrachte Luft strömt daher entlang der gebogenen Wandung 8. Zusätzlich bedingt durch die wendelartige hintere Wandung 11 der zweiten Ausströmelemente 1b, 2b, 3b, 4b tritt die so mit einem Drall versehene Luft im wesentlichen gleichmäßig über die Ausstrittsfläche 7 aus. Aufgrund des Dralls ist der Luft im Prinzip über jedem Punkt der Austrittsfläche 7 eine andere Austrittsrichtung zugeordnet, so daß die Luft durch die zweiten Ausstritttselemente 1b, 2b, 3b, 4b im wesentlichen diffus in den Fahrgastraum abgegeben wird. In dem ersten Ausführungsbeispiel sind sämtliche der vier nebeneinander angeordneten zweiten Ausströmkanäle 1b, 2b, 3b, 4b so geformt, daß die Luft jeweils in gleicher Drehrichtung verwirbelt wird.

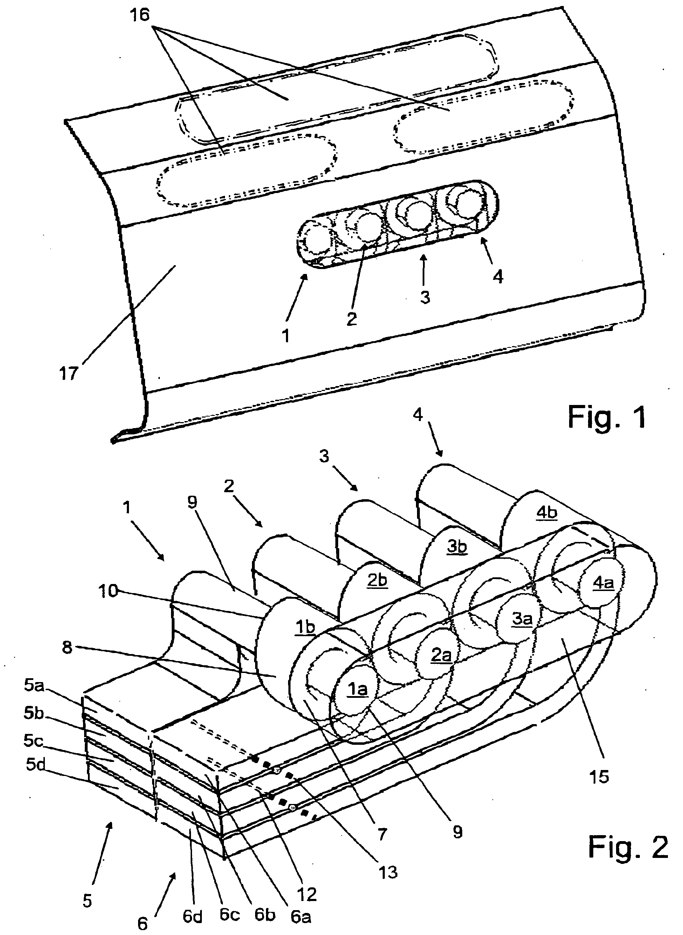

Gemäß Fig. 2 sind in den Zuleitungskanälen Klappenelemente 12, 13 auf an sich bekannte Weise angeordnet. Grundsätzlich kann jeder der Zuleitungskanäle 5a bis 5d, 6a bis 6d eine eigene Steuerklappe aufweisen, wodurch die Einstellbarkeit der ausströmenden Luft optimal wird. Je nach Anforderungen ist aber auch eine beliebige Reduzierung der Anzahl der Klappenelemente 12, 13 möglich, indem sich etwa ein Klappenelement über mehrere Zuleitungskanäle erstreckt.

Die vier Ausströmelemente 1, 2, 3, 4 weisen eine gemeinsame Ausströmfläche 15 auf, die gemäß der Anordnung der Ausströmelemente 1, 2, 3, 4 von länglicher Form ist. Die Ausströmfläche 15 ist noch vor den vorderen Abschlußkanten der Rohrabschnitte 9 der ersten Ausströmkanäle angeordnet. Sie kann optisch mit einem luftdurchlässigen Sichtgitter kaschiert sein; alternativ können auch einstellbare Luftleitelemente wie etwa eine Mehrzahl von verstellbaren Lamellen im Bereich der Austrittsfläche angeordnet sein.

Bei der in Fig. 1 dargestellten Anordnung des Luftausströmers in einem Armaturenbrett 17 eines Kraftfahrzeugs sind alternative oder ergänzende Positionen 16 für einen erfindungsgemäßen Luftausströmer markiert.

Die insgesamt acht Zuleitungskanäle 5, 6 sind zunächst als insgesamt rechteckiges Paket gebündelt, bevor sie sich im weiteren Strömungsverlauf zu den jeweils zugeordneten Ausströmelementen verzweigen. Dabei sind die zweiten Zuleitungskanäle 6a, 6b, 6c, 6d in der Ansicht von vorne gemäß Fig. 2 vor den ersten Zuleitungskanälen angeordnet. Die ersten Zuleitungskanäle 5a, 5b, 5c, 5d zweigen zu den ersten Ausströmkanälen 1a, 2a, 3a, 4a jeweils in der Weise ab, daß die Kanäle jeweils zunächst eine Aufwärtsbiegung um etwa 90 Grad vollführen und dann in ihren jeweiligen Rohrabschnitt 9 münden. In diesen Verbindungsbereichen 18 mit den Rohrabschnitten 9 wird die Luft abermals um 90 Grad umgelenkt, bevor sie die geraden Rohrabschnitte 9 durchströmt und spotartig gerichtet aus diesen austritt.

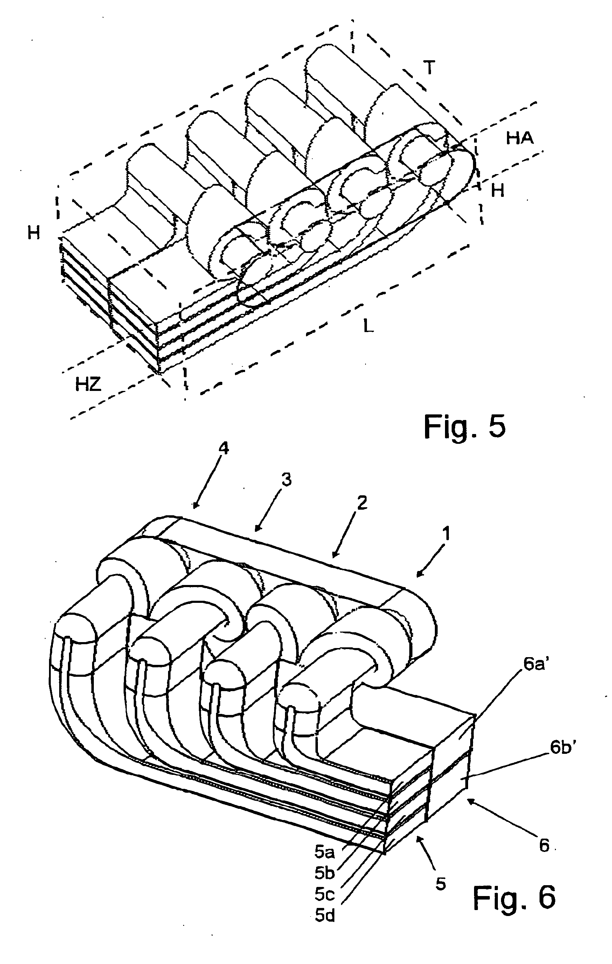

Insgesamt bilden die vier Ausströmelemente 1, 2, 3, 4 und die Zuleitungskanäle 5, 6 somit eine gemeinsame, kompakte Baueinheit aus. In der Darstellung gemäß Fig. 5 ist ein diese Baueinheit einhüllender Quader dargestellt, durch dessen Kantenlängen eine Bautiefe T, eine Bauhöhe H und eine Baulänge L definiert ist. Vorliegend beträgt die Bautiefe T etwa 130 mm, die Bauhöhe H etwa 95 mm und die Baulänge L etwa 230 mm. Dabei weist die längliche Ausströmfläche 15 eine Höhe HA von etwa 45 mm auf. Dies entspricht zugleich dem äußeren Durchmesser der kreisringförmigen Austrittsflächen 7 der zweiten Ausströmkanäle 1b, 2b, 3b, 4b und in etwa der Hälfte der gesamten Bauhöhe des Luftausströmers. Ebenso weisen die Zuleitungskanäle 5, 6 in ihrem noch nicht verzweigten Anfangsbereich eine Bauhöhe HZ auf, die etwa der Hälfte der gesamten Bauhöhe H entspricht. Da die Zuleitungskanäle 5, 6 im Anfangsbereich und die Austrittselemente 1, 2, 3, 4 vollständig, aber ohne Zwischenraum in Höhenrichtung versetzt zueinander angeordnet sind, setzt sich die gesamte Bauhöhe H additiv aus den Bauhöhen HZ und HA zusammen.

Das Verhältnis der gesamten Bautiefe T zur gesamten Bauhöhe H beträgt etwa 1,4. Dies ist insbesondere für beengte Einbauräume wie etwa Armaturenbretter ein günstiges Verhältnis.

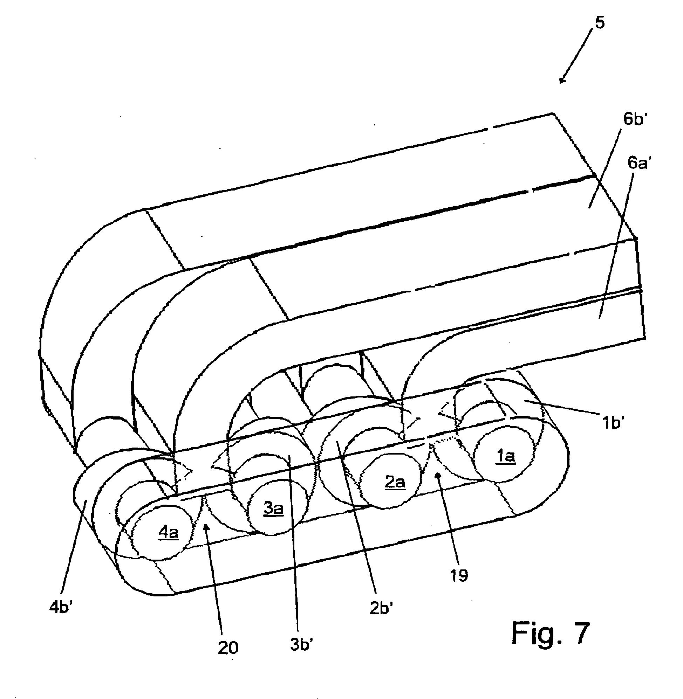

Das zweite bevorzugte Ausführungsbeispiel gemäß Fig. 6 und Fig. 7 entspricht hinsichtlich Bauraum und Maßverhältnisse im wesentlichen dem ersten Ausführungsbeispiel. Ebenso sind Anordnung und Verlauf der ersten Zuleitungskanäle 5 und der ersten Ausströmkanäle 1a, 2a, 3a, 4a wie beim ersten Ausführungsbeispiel ausgebildet.

Im Unterschied zu dem ersten Ausführungsbeispiel weist der Luftausströmer gemäß Fig. 6 und Fig. 7 lediglich zwei separate zweite Zuleitungskanäle 6a',6b' auf, die im Vergleich zu denjenigen des ersten Ausführungsbeispiels jeweils eine doppelte Bauhöhe haben. Der zweite Zuleitungskanal 6a' ist in einem Verbindungsbereich 19 zugleich mit den zweiten Ausströmkanälen 1b' und 2b' des ersten und zweiten Ausströmelementes 1, 2 verbunden. Analog ist der zweite Zuleitungskanal 6b'in einem Verbindungsbereich 20 zugleich mit den zweiten Ausströmkanälen 3b' und 4b' des dritten und vierten Ausströmelementes 3, 4 verbunden. Die Verbindungsbereiche 19, 20 befinden sich dabei jeweils mittig zwischen den jeweils verbundenen Ausströmkanälen 1b', 2b' bzw. 3b', 4b'. Zweckmäßig sind dabei die Drehrichtungen der spiraligen Ausströmkanäle 1b' und 2b' zueinander gegensinnig, ebenso wie diejenigen der Ausströmkanäle 3b' und 4b'. Abgesehen von den unterschiedlichen Drehrichtungen sowie den paarweise gemeinsamen Zuleitungskanälen sind die zweiten Ausströmkanäle 1b', 2b', 3b', 4b' ebenso wie im Fall des ersten Ausführungsbeispiels ausgebildet.

## Patentansprüche

1. Luftausströmer, insbesondere für ein Kraftfahrzeug, umfassend
einen ersten Zuleitungskanal (5) und einen zweiten Zuleitungskanal (6) zur Zuführung von Luft,
ein erstes Austrittselement (1), wobei die Luft des ersten Zuleitungskanals (5) und die Luft des zweiten Zuleitungskanals (6) aus dem Austrittselement (1) ausströmt,
wobei das Austrittselement (1) einen ersten, dem ersten Zuleitungskanal (5) zugeordneten Ausströmkanal (1a) und einen zweiten, dem zweiten Zuleitungskanal (6) zugeordneten Ausströmkanal (1b) aufweist,
wobei der erste Ausströmkanal (1a) eine gerade Formgebung zum im wesentlichen gerichteten Ausströmen der Luft aufweist,
wobei der zweite Ausströmkanal (1b) eine gekrümmte Formgebung zum im wesentlichen diffusen Ausströmen der Luft und Ablenkmittel für die Luft aufweist, die eine gebogene, teilkreisförmige Wandung (8) umfassen, **dadurch gekennzeichnet, dass** zumindest ein zweites Austrittselement (2, 3, 4) vorgesehen ist, welches mit dem ersten Austrittselement (1) eine gemeinsame Baueinheit ausbildet, und eine Höhe der gebogenen Wandung (8) über den Verlauf der Wandung (8) abnimmt, wobei das Verhältnis einer Bautiefe (T) des Luftausströmers zu einer Bauhöhe (H) des Luftausströmers nicht größer als etwa 2 ist.

2. Luftausströmer nach Anspruch 1, **dadurch gekennzeichnet, daß** das zweite Austrittselement (2, 3, 4) die gleiche Bauart aufweist wie das erste Austrittselement (1).

3. Luftausströmer nach einem der vorhergehenden Ansprüche, **dadurch gekennzeichnet, daß** zumindest einer der beiden Zuleitungskanäle (6a', 6b') sowohl dem ersten als auch dem zweiten Austrittselement (1, 2, 3, 4) zugeordnet ist.

4. Luftausströmer nach Anspruch 3, **dadurch gekennzeichnet, daß** der jeweils andere der Zuleitungskanäle sowohl dem ersten als auch dem zweiten Austrittselement zugeordnet ist.

5. Luftausströmer nach Anspruch 1 oder 2, **dadurch gekennzeichnet, daß** ein dritter Zuleitungskanal (5b) und ein vierter Zuleitungskanal (6b) vorgesehen sind, welche dem zweiten Austrittselement (2) zugeordnet sind.

6. Luftausströmer nach einem der vorhergehenden Ansprüche, **dadurch gekennzeichnet, daß** insgesamt drei Austrittselemente (1, 2, 3) der im wesentlichen gleichen Bauart benachbart in einer gemeinsamen Baueinheit angeordnet sind.

7. Luftausströmer nach einem der Ansprüche 1 bis 5, **dadurch gekennzeichnet, daß** insgesamt vier Austrittselemente (1, 2, 3, 4) der im wesentlichen gleichen Bauart benachbart in einer gemeinsamen Baueinheit angeordnet sind.

8. Luftausströmer nach einem der vorhergehenden Ansprüche, **dadurch gekennzeichnet, daß** der zweite Ausströmkanal (1b', 3b') des ersten Austrittselements (1) und ein zweiter Ausströmkanal (2b', 4b') des zweiten Austrittselements (2) jeweils eine gekrümmte Formgebung aufweisen, die hinsichtlich einer resultierenden Drehrichtung der jeweils durchströmenden Luft entgegengesetzt ist.

9. Luftausströmer nach einem der Ansprüche 1 bis 7, **dadurch gekennzeichnet, daß** der zweite Ausströmkanal (1b) des ersten Austrittselements (1) und ein zweiter Ausströmkanal 2b, 3b, 4b) des zweiten Austrittselements (2, 3, 4) jeweils eine gekrümmte Formgebung aufweisen, die hinsichtlich einer resultierenden Drehrichtung der jeweils durchströmenden Luft gleichgerichtet ist.

10. Luftausströmer nach einem der vorhergehenden Ansprüche, **dadurch gekennzeichnet, daß** die Austrittselemente (1, 2, 3, 4) der gemeinsamen Baueinheit in einer Reihe nebeneinander angeordnet sind.

11. Luftausströmer nach einem der Ansprüche 1 bis 10, **dadurch gekennzeichnet, daß** der erste Ausströmkanal (1a, 2a, 3a, 4a) im wesentlichen die Form eines Rohres aufweist, wobei die Luft den ersten Ausströmkanal (1a, 2a, 3a, 4a) vorherrschend parallel zu einer Längsachse des Rohres durchströmt.

12. Luftausströmer nach einem der Ansprüche 1 bis 11, **dadurch gekennzeichnet, daß** die Wandung (8) des zweiten Ausströmkanals (1b, 2b, 3b, 4b) den ersten Ausströmkanal (1a, 2a, 3a, 4a) zumindest teilweise umgibt.

13. Luftausströmer nach einem der Ansprüche 1 bis 12, **dadurch gekennzeichnet, daß** der Luftausströmer in einem Armaturenbrett (17) eines Kraftfahrzeugs anordenbar ist.

14. Luftausströmer nach einem der Ansprüche 1 bis 13, **dadurch gekennzeichnet, daß** innerhalb eines Zuleitungskanals (5, 6) ein Klappenelement (12, 13) zur einstellbaren Veränderung eines Durchlaßquerschnitts des Zuleitungskanals (5, 6) vorgesehen ist.

15. Luftausströmer nach einem der Ansprüche 1 bis 14, **dadurch gekennzeichnet, daß** das Verhältnis einer Bautiefe (T) des Luftausströmers zu einer Bauhöhe (H) des Luftausströmers nicht größer als etwa 1,5 ist.

16. Luftausströmer nach einem der Ansprüche 1 bis 15, **dadurch gekennzeichnet, daß** das Verhältnis einer gesamten Bauhöhe (H) des Luftausströmers zu einer gesamten Bauhöhe (HZ) der Zuleftungskanäle nicht größer als etwa 2 ist.

17. Luftausströmer nach einem der Ansprüche 1 bis 16, **dadurch gekennzeichnet, daß** eine Bauhöhe HA der Ausströmkanäle annähernd so groß ist wie eine Bauhöhe HZ der Zuleitungskanäle.

## Claims

1. Air outlet, in particular for a motor vehicle, comprising a first supply duct (5) and a second supply duct (6) for the supply of air, and a first outlet element (1),
the air in the first supply duct (5) and the air in the second supply duct (6) flowing out of the outlet element (1),
the outlet element (1) having a first outlet duct (1a) assigned to the first supply duct (5) and a second outlet duct (1b) assigned to the second supply duct (6),
the first outlet duct (1a) having a straight shape to permit the essentially directed outflow of air,
the second outlet duct (1b) having a curved shape to permit the essentially diffuse outflow of air and diverting means for the air which comprise a curved, arc-shaped wall (8),
**characterised in that**
there is provided at least one second outlet element (2, 3, 4) which forms a common module with the first outlet element (1) and a height of the curved wall (8) decreases along the length of the wall (8), the ratio of an overall depth (T) of the air outlet to an overall height (H) of the air outlet being no greater than approximately 2.

2. Air outlet in accordance with claim 1,
**characterised in that**
the second outlet element (2, 3, 4) is of the same design as the first outlet element (1).

3. Air outlet in accordance with one of the preceding claims,
**characterised in that**
at least one of the two supply ducts (6a', 6b') is assigned both to the first and to the second outlet element (1, 2, 3, 4).

4. Air outlet in accordance with claim 3,
**characterised in that**
the other supply duct is assigned both to the first and to the second outlet element.

5. Air outlet in accordance with claim 1 or 2,
**characterised in that**
a third supply duct (5b) and a fourth supply duct (6b), both assigned to the second outlet element (2), are provided.

6. Air outlet in accordance with one of the preceding claims,
**characterised in that**
a total of three outlet elements (1, 2, 3) of essentially the same design are positioned adjacent to one another in a common module.

7. Air outlet in accordance with one of claims 1 to 5,
**characterised in that**
a total of four outlet elements (1, 2, 3, 4) of essentially the same design are positioned adjacent to one another in a common module.

8. Air outlet in accordance with one of the preceding claims,
**characterised in that**
the second outlet duct (1b', 3b') of the first outlet element (1) and a second outlet duct (2b', 4b') of the second outlet element (2) each have a curved shape which is opposed to a resulting direction of rotation of the air as it flows through.

9. Air outlet in accordance with one of claims 1 to 7,
**characterised in that**
the second outlet duct (1b) of the first outlet element (1) and a second outlet duct (2b, 3b, 4b) of the second outlet element (2, 3, 4) each have a curved shape which is runs in the same direction as a resulting direction of rotation of the air as it flows through.

10. Air outlet in accordance with one of the preceding claims,
**characterised in that**
the outlet elements (1, 2, 3, 4) of the common module are positioned in a row adjacent to one another.

11. Air outlet in accordance with one of claims 1 to 10,
**characterised in that**
the first outlet duct (1a, 2a, 3 a, 4a) is essentially tubular in shape, the air flowing through the first outlet duct (1a, 2a, 3a, 4a) predominantly parallel to a longitudinal axis of the tube.

12. Air outlet in accordance with one of claims 1 to 11,
**characterised in that**
the wall (8) of the second outlet duct (1a, 2a, 3a, 4a) at least partially surrounds the first outlet duct (1a, 2a, 3a, 4a).

13. Air outlet in accordance with one of claims 1 to 12,
**characterised in that**
the air outlet can be positioned in an instrument panel (17) of a motor vehicle.

14. Air outlet in accordance with one of claims 1 to 13,
**characterised in that**
provided within a supply duct (5, 6) is a valve element (12, 13) for the adjustable modification of a throughput cross-section of the supply duct (5, 6).

15. Air outlet in accordance with one of claims 1 to 14,
**characterised in that**
the ratio of an overall depth (T) of the air outlet to an overall height (H) of the air outlet is no greater than approximately 1.5.

16. Air outlet in accordance with one of claims 1 to 15,
**characterised in that**
the ratio of an overall height (H) of the air outlet to an overall height (HZ) of the supply duct is no greater than approximately 2.

17. Air outlet in accordance with one of claims 1 to 16,
**characterised in that**
an overall height (HA) of the outlet ducts is approximately the same as the overall height (HZ) of the supply ducts.

## Revendications

1. Diffuseur d'air, en particulier pour un véhicule automobile, comprenant :
- un premier conduit d'alimentation (5) et un deuxième conduit d'alimentation (6) pour la fourniture d'air,
- un premier élément de sortie (1), où l'air du premier conduit d'alimentation (5) et l'air du deuxième conduit d'alimentation (6) s'écoule par l'élément de sortie (1),
où l'élément de sortie (1) présente un premier conduit d'écoulement (1a) associé au premier conduit d'alimentation (5) et un deuxième conduit d'écoulement (1b) associé au deuxième conduit d'alimentation (6),
où le premier conduit d'écoulement (1a) présente une forme rectiligne pour l'écoulement de l'air, essentiellement dirigé,
où le deuxième conduit d'écoulement (1b) présente une forme recourbée servant à l'écoulement de l'air, essentiellement diffus, et des moyens déflecteurs d'air qui comprennent une paroi courbe (8) en forme de cercle partiel,
**caractérisé en ce qu'**il est prévu au moins un deuxième élément de sortie (2, 3, 4) qui forme, avec le premier élément de sortie (1), un ensemble modulaire commun, et une hauteur de la paroi courbe (8) diminue sur l'étendue de la paroi (8), où le rapport d'une hauteur modulaire (T) du diffuseur d'air, relativement à une hauteur modulaire (H) du diffuseur d'air, n'est pas supérieur à 2 environ.

2. Diffuseur d'air selon la revendication 1, **caractérisé en ce que** le deuxième élément de sortie (2, 3, 4) présente le même type modulaire que le premier élément de sortie (1).

3. Diffuseur d'air selon l'une ou l'autre des revendications précédentes, **caractérisé en ce qu'**au moins l'un des deux conduits d'alimentation (6a', 6b') est associé aussi bien au premier qu'au deuxième élément de sortie (1, 2, 3, 4).

4. Diffuseur d'air selon la revendication 3, **caractérisé en ce que** l'autre conduit d'alimentation est à chaque fois associé aussi bien au premier qu'au deuxième élément de sortie.

5. Diffuseur d'air selon la revendication 1 ou 2, **caractérisé en ce qu'**il est prévu un troisième conduit d'alimentation (5b) et un quatrième conduit d'alimentation (6b) qui sont associés au deuxième élément de sortie (2).

6. Diffuseur d'air selon l'une quelconque des revendications précédentes, **caractérisé en ce que**, au total, trois éléments de sortie (1, 2, 3), pratiquement du même type modulaire, sont disposés de façon voisine, dans un ensemble modulaire commun.

7. Diffuseur d'air selon l'une quelconque des revendications 1 à 5, **caractérisé en ce que**, au total, quatre éléments de sortie (1, 2, 3, 4), pratiquement du même type modulaire, sont disposés de façon voisine, dans un ensemble modulaire commun.

8. Diffuseur d'air selon l'une quelconque des revendications précédentes, **caractérisé en ce que** le deuxième conduit d'écoulement (1b', 3b') du premier élément de sortie (1) et un deuxième conduit d'écoulement (2b', 4b') du deuxième élément de sortie (2) présentent respectivement une forme recourbée qui est de sens opposé par rapport à une direction de rotation qui en résulte, concernant l'air traversant à chaque fois.

9. Diffuseur d'air selon l'une quelconque des revendications 1 à 7, **caractérisé en ce que** le deuxième conduit d'écoulement (1b) du premier élément de sortie (1) et un deuxième conduit d'écoulement (2b, 3b, 4b) du deuxième élément de sortie (2, 3, 4) présentent respectivement une forme recourbée qui est dirigée dans la même direction par rapport à une direction de rotation qui en résulte, concernant l'air traversant à chaque fois.

10. Diffuseur d'air selon l'une quelconque des revendications précédentes, **caractérisé en ce que** les éléments de sortie (1, 2, 3, 4) de l'ensemble modulaire commun sont disposés les uns à côté des autres, sur une rangée.

11. Diffuseur d'air selon l'une quelconque des revendications 1 à 10, **caractérisé en ce que** le premier conduit d'écoulement (1a, 2a, 3a, 4a) présente sensiblement la forme d'un tube, où l'air traverse le premier conduit d'écoulement (1a, 2a, 3a, 4a), de façon prédominante parallèlement à un axe longitudinal du tube.

12. Diffuseur d'air selon l'une quelconque des revendications 1 à 11, **caractérisé en ce que** la paroi (8) du deuxième conduit d'écoulement (1b, 2b, 3b, 4b) entoure le premier conduit d'écoulement (1a, 2a, 3a, 4a) au moins partiellement.

13. Diffuseur d'air selon l'une quelconque des revendications 1 à 12, **caractérisé en ce que** le diffuseur d'air peut être disposé dans un tableau de bord (17) d'un véhicule automobile.

14. Diffuseur d'air selon l'une quelconque des revendications 1 à 13, **caractérisé en ce qu'**il est prévu, à l'intérieur d'un conduit d'alimentation (5, 6), un élément à volet (12, 13) servant à la modification réglable d'une section de passage du conduit d'alimentation (5, 6).

15. Diffuseur d'air selon l'une quelconque des revendications 1 à 14, **caractérisé en ce que** le rapport d'une profondeur modulaire (T) du diffuseur d'air, relativement à une hauteur modulaire (H) du diffuseur d'air, n'est pas supérieur à 1,5 environ.

16. Diffuseur d'air selon l'une quelconque des revendications 1 à 15, **caractérisé en ce que** le rapport d'une hauteur modulaire totale (H) du diffuseur d'air, relativement à une hauteur modulaire totale (HZ) des conduits d'alimentation, n'est pas supérieur à 2 environ.

17. Diffuseur d'air selon l'une quelconque des revendications 1 à 16, **caractérisé en ce qu'**une hauteur modulaire (HA) des conduits d'écoulement est presque aussi importante qu'une hauteur modulaire (HZ) des conduits d'alimentation.
